Europäisches Patentamt

European Patent Office

Office européen des brevets

(11) Publication number: **0 485 816 A2**

# EUROPEAN PATENT APPLICATION

(21) Application number: **91118660.9**

(22) Date of filing: **31.10.91**

(51) Int. Cl.⁵: **G01N 35/00**, B01L 7/00

(30) Priority: **12.11.90 ES 9002863**

(43) Date of publication of application:
**20.05.92 Bulletin 92/21**

(84) Designated Contracting States:
**BE DE ES FR IT NL**

(71) Applicant: **GRUPO GRIFOLS, S.A.**
**Poligono Levante, Can Guasch s/n**
**E-08150 Parets Del Valles, (Barcelona)(ES)**

(72) Inventor: **Enrique Martinell, Gisper-Sauch**
**P San Juan 34**
**ES-08010 Barcelona(ES)**

(74) Representative: **Klunker . Schmitt-Nilson .**
**Hirsch**
**Winzererstrasse 106**
**W-8000 München 40(DE)**

(54) **A programmable dosing apparatus for the deposition of reagents on to small format slides or plates with their incubation.**

(57) A Programmable dosing apparatus for the deposition of reagents on to small format slides or plates and their incubation:
Characterized in that it consists of a single combined and compact console housing the bottles of reagents and the peristaltic pumps for feeding the nozzles, with a mechanism for carrying the nozzles which can move along a linear axis and combined with a carrier block for the small format plate or microtitre which can travel along an axis perpendicular to the former and also including a programming device for the control and programming of the dosing apparatus by means of a keyboard built in to the apparatus itself allowing an automatic control over the incubation times and the intervals and variations from one reagent addition to another. The apparatus is applicable to general and clinical analysis technology using the small format plate requiring precision incubation.

FIG.1

This invention patent discloses a programmable apparatus for the deposition of reagents on to small format slides or plates or microtitre with their incubation.

The apparatus is normally utilized for clinical analysis and any type of technical analysis on microtitre slide-plates requiring precision incubation.

The automatic liquid dispensing systems currently known for the deposition of reagents or samples on to microtitre plates or slides have disadvantages with respect to the absence of incubation around each of the pockets on the microtitre plate, usually 96 in number as well as limitations in the volume of reagent to be dispensed, and the lack of control over the intervals of time between successive reagent deposits.

The apparatus disclosed in this patent has the capability for incubating each pocket in the plate during the analysis process and has a good flexibility in the programming of the volumes to be dosed with also an automatic control of the time between the times from one addition to another and the incubation time. Further, it has the capability to programme and vary these incubation times.

The dosing apparatus object of this patent is characterized in that the carrier block supporting the slide-plate is provided with a thermostatic means such that a suitable temperature may be maintained during the process.

In its preferred form the invention comprises four peristaltic pumps and four disposable and easily replaceable silicone tubes for the feeding of the four reagents. The apparatus has a keyboard for controlling the volume of the reagents and the intervals of time between one reagent and the next. The slide-plate carrier block is in aluminium and has 96 holes for the continuous incubation of the microtitre plate pockets.

To assist in the explanation drawings of one non-limitive embodiment of the programmable dosing apparatus as disclosed in the present patent are attached hereto.

Figure 1 is a front view in perspective of the complete dosing apparatus as disclosed in this patent.

Figure 2 shows one of the tubes for feeding the reagent to the dosing nozzles.

Figures 3 and 4 respectively show cross sections on planes III-III and IV-IV from figure 2.

Figure 6 is a plan view of the assembly of the mechanism for actuating the microtitre plate.

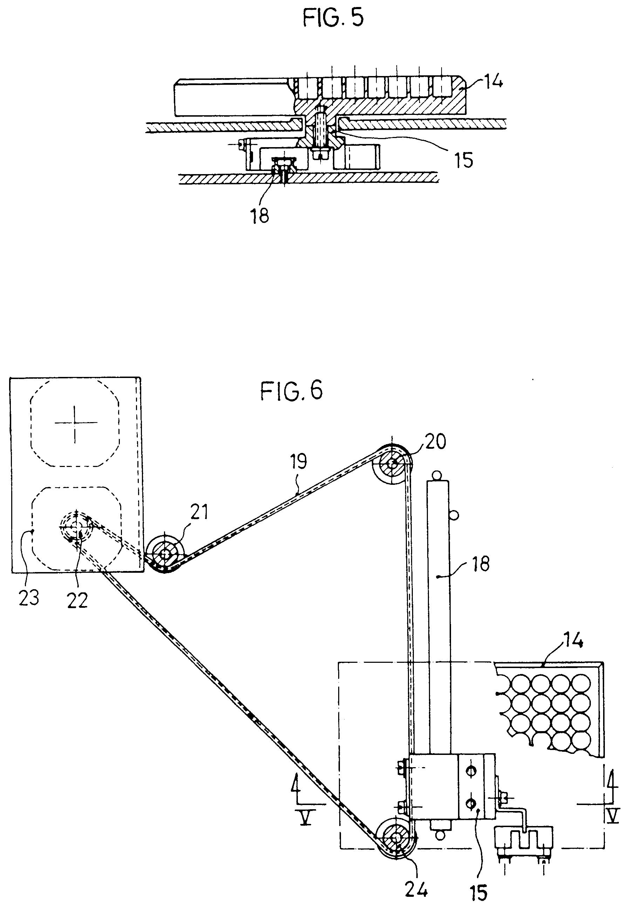

Figure 5 shows a section of the microtitre plate of the apparatus.

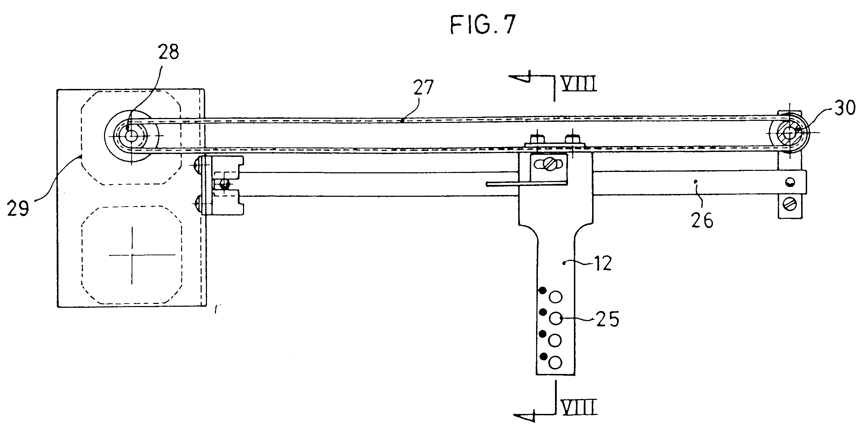

Figure 7 is a plan view of the arm operating device which carries the reagent dosing nozzles.

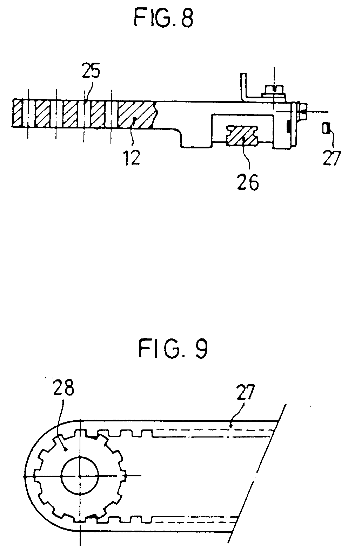

Figure 8 is a cross-section on the plane VIII-VIII and figure 9 is a plan view of the actuating means using toothed belts.

As may be seen in the drawings the dosing apparatus object of this patent comprises a single encasing console -1- a programming and control keyboard for the operation of the apparatus -2-, a screen -3- for displaying of the individual readings, and a set of four peristaltic pumps -4-, -5-, -6- and -7-, which receive the corresponding reagents from the bottles -8-, -9-, -10- and -11-, feeding then to the corresponding dosification nozzles forming part of a movable arm -12- through one of the conducting tubes, such as ahown as -13-. The microtitre plate -14- is connected to the carrier block -15- which is mobile within the apparatus, with the result that the displacement of the arm -12- and the carrier block along two mutually right angled axes is a movement corresponding to two co-ordinated axes.

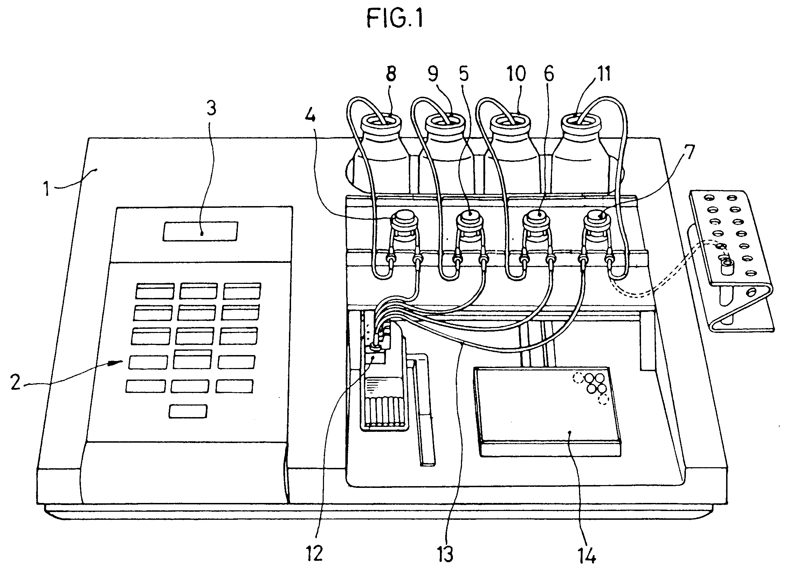

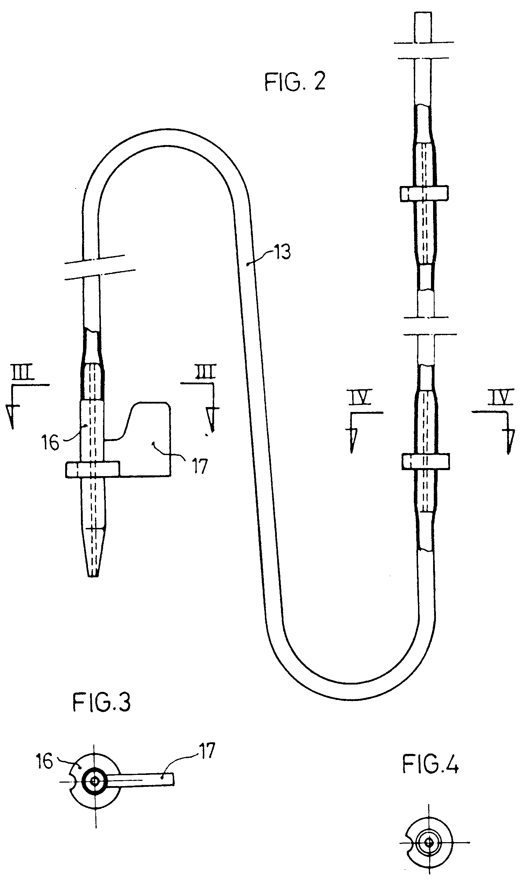

Each of the tubes -13- connecting the peristaltic pumps with its corresponding nozzle -16-, in figure 2, is made of disposable silicone. The nozzle -16- is attached to the movable arm -12- on which its position may easily be adjusted, removed or manually mounted by means of a small side wing -17- which forms part of the individual nozzle in question.

As may be seen in figures 5 and 6 the microtitre plate -14- is able to move along a straight guide rail -18- through the action of a toothed belt -19- running on pinions -20- and -21- , driven and, operating from the motorized pinion -22- on the motor -23-, the pinion -24- which is attached to the support of the microtitre plate -14-.

The movement of the microtitre plate -14-as described is combined with a movement along an axis perpendicular to it, of the arm -12- carrying the nozzles. This arm -12- is provided with individual orifices -25- equal to the number of nozzles, and is displaceable along a fixed guide member -26-, actuated by a toothed belt -27- driven by a pinion -28-from the motor -29- fixed to the rear part of the arm -12- and passing over a driven pinion -30-.

A further characteristic of the programmable dosing apparatus, object of this patent is that the crrier block -15- on which is mounted the microtitre plate -14- is fitted with a thermostatic device for the control of the temperature which it is required to maintain during the whole process.

The arrangement as disclosed above offers an extremely compact dosing apparatus allowing incubation around each of the 96 pockets in the microtitre plate combined with the programming capability of the volumes of added reagents at programmable time intervals between the reagents, these being functional characteristics novel to this type of equipment.

All that does not alter affect or vary the essence of the disclosed dosing apparatus is a variable for purpose of this patent.

## Claims

1. A programmable dosing apparatus for the deposition of reagents on to small format slides or plates with their incubation characterized in that it consists of a single combined and compact console housing the bottles of reagents and the peristaltic pumps for feeding the nozzles, with a mechanism for carrying the nozzles which can travel along a linear axis combined with a block carrying the small format plate or microtitre which can travel along an axis perpendicular to the former, there being also a device for programming and controlling the dosing apparatus by means of a keyboard, allowing the variation and programming of the time intervals for incubation and the automatic control of the timing between the deposition of one reagent and the one following.

2. A programmable dosing apparatus for the deposition of reagents on to small format slides or plates with their incubation as in claim 1, characterized in that the individual nozzles which receive the reagents from the peristaltic pumps are connected to a single mobile arm travelling along a straight guide bar of the apparatus, actuated by means of an individual motor driving a toothed belt transmission.

3. A programmable dosing apparatus for the deposition of reagents on to small format slides or plates with their incubation as in claim 1, characterized in that the block carrying the plate is movable along a straight guide perpendicular to that of the arm carrying the nozzles and actuated by means of an individual motor and toothed belt, so allowing the movement of the microtitre plate perpendicular to the direction of the movement of the arm carrying the nozzles.

4. A programmable dosing apparatus for the deposition of reagents on to small format slides or plates with their incubation as in claim 1, characterized in that hte individual feed tubes for the reagents are of a disposable silicone material and are incorporated into the individual nozzles which have integral lateral flat wing extensions to facilitate their manual fitting.

5. A programmable dosing apparatus for the deposition of reagents on to small format slides or plates with their incubation as in claim 1, characterized by the block carrying the plate housing the pockets being provided with a thermostatic means for controlling the temperature at an adequate level during the process.

FIG.1

FIG. 2

FIG.3

FIG.4

## FIG. 5

## FIG. 6

# FIG.7

28

27

VIII

30

29

VIII

12

25

26

EP 0 485 816 A2

7

EP 0 485 816 A2

FIG. 8

FIG. 9